# FASCICULE DE BREVET EUROPEEN

(11) **EP 0 478 405 B1**
(45) Date de publication et mention de la délivrance du brevet: **01.03.2000**
(21) Numéro de dépôt: 91402305.6
(22) Date de dépôt: 23.08.1991
(51) Int. Cl.: B32B 17/10, C03C 27/12

(54) **Vitrage latéral déplaçable en hauteur pour véhicules automobiles**
Höhenverschiebbare laterale Scheibe für Autos
Vertically sliding lateral pane for cars

(30) Priorité: 27.08.1990 DE 4027035
(43) Date de publication de la demande: 01.04.1992
(73) Titulaire: SAINT-GOBAIN VITRAGE, 92400 Courbevoie (FR); SEKURIT SAINT GOBAIN Deutschland GmbH & Co. KG, 52066 Aachen (DE)
(72) Inventeur: Krämling, Franz, Dr., W-5100 Aachen (DE); Berndsen, Friedrich-Wilhelm M., W-5100 Aachen (DE)
(74) Mandataire: Muller, René

(56) Documents cités:
- FR-A- 2 323 650
- LU-A- 52 710

## Description

La présente invention concerne un vitrage automobile, en particulier un vitrage latéral déplaçable en hauteur, en verre feuilleté constitué de deux feuilles de verre individuelles qui ont subi chacune une trempe thermique et qui sont unies l'une à l'autre au moyen d'une couche intermédiaire en matière thermoplastique.

Un vitrage automobile descendant de ce type est connu d'après le document DE-GM 89 10 916. Dans le cas de ce vitrage latéral connu, la feuille de verre individuelle extérieure du vitrage feuilleté a une épaisseur de 3 à 4 mm et présente dans l'ensemble la trempe habituelle d'une vitre de sécurité trempée. La feuille de verre individuelle intérieure du vitrage feuilleté à une épaisseur de 1,5 à 2,5 mm et est en verre non trempé ou faiblement trempé. La feuille de verre individuelle intérieure est, en outre, de dimensions plus petites que la feuille de verre trempé extérieure, et la zone marginale dépassante de la feuille de verre trempé extérieure sert au guidage du vitrage feuilleté dans les glissières du cadre de la fenêtre. Les deux feuilles de verre individuelles sont réunies l'une à l'autre à l'aide d'une pellicule de matière thermoplastique de 0,38 à 2,0 mm d'épaisseur.

De par sa structure, ce vitrage connu est dans une large mesure résistant aux effractions et aux fractures et doit, en outre, assurer une isolation phonique élevée. La résistance aux effractions et aux fractures est basée, d'une part, sur la couche intermédiaire thermoplastique relativement épaisse et, d'autre part, sur le fait que la feuille de verre individuelle intérieure qui n'est pas trempée ou qui n'est que faiblement trempée, même en cas de destruction de la feuille de verre trempé extérieure, grâce à la couche intermédiaire épaisse, n'est pas elle-même détruite ou, si elle est détruite, elle ne se fragmente qu'en de très grands morceaux, de sorte que la baie de fenêtre reste en tout cas fermée. Cela signifie cependant que, même dans les cas où la possibilité de fracture des vitrages latéraux est souhaitée, par exemple dans le cas d'un accident, la résistance élevée de ces vitrages latéraux connus empêche une fracture rapide et ainsi, en particulier, un accès rapide aux occupants du véhicule.

L'invention a pour but de réaliser un vitrage latéral en verre feuilleté qui, par rapport à ces vitrages latéraux automobiles connus, présente de meilleures propriétés du point de vue de la sécurité en cas d'accident de circulation et, en outre, possède une structure simple et puisse être fabriqué à l'aide des installations de production connues.

Le vitrage latéral conforme à l'invention est caractérisé en ce que chacune des deux feuilles de verre individuelles a une épaisseur de 1,5 à 3,5 mm et est constituée d'une zone centrale et d'une zone marginale tout autour de la zone centrale, chaque feuille de verre présente une trempe différenciée sur sa surface à tel point que la contrainte de traction à coeur moyenne dans la zone centrale de la feuille de verre est inférieure de 20 à 40 % à celle nécessaire pour créer de 40 à 400 fragments de verre lors de la destruction d'un carré de 5 cm x 5 cm d'un verre de sécurité trempé uniformément ayant la même épaisseur que la feuille de verre et que la contrainte de traction à coeur moyenne dans la zone marginale est inférieure de 5 à 15 % à celle nécessaire pour créer 40 à 400 fragments de verre lors de la destruction d'un carré de 5 cm x 5 cm d'un verre de sécurité trempé uniformément ayant la même épaisseur que la feuille de verre.

Le verre de sécurité trempé présente habituellement une trempe telle que les exigences prédéterminées par les normes en vigueur et concernant le nombre et la grandeur des fragments de verre en cas de destruction du vitrage, soient respectées. Dans le cas de vitrages latéraux automobiles, cela implique que, pour des vitrages d'une épaisseur de 2 à 3 mm, dans un carré de 5 cm x 5 cm, le nombre des fragments ne peut ni être inférieur à 40 ni supérieur à 400. Comme l'enseigne la littérature professionnelle, un nombre de fragments de 40 pour un vitrage de 2 mm d'épaisseur correspond à une contrainte de traction à coeur moyenne de 64 MN/m² et, pour un vitrage de 3 mm d'épaisseur, à une contrainte de traction à coeur moyenne de 55 MN/m², tandis qu'un nombre de fragments de 400, pour un vitrage de 2 mm d'épaisseur, correspond à une contrainte de traction à coeur moyenne de 80 MN/m² et, pour un vitrage de 3 mm d'épaisseur, à une contrainte de traction moyenne de 75 MN/m² (Kazuyuki Akeyoshi et al. "Study on the Physical Tempering of Glass Plates", Reports of the Research Laboratory of Asahi Glass Company 17, n° 1, 1967).

Dans l'hypothèse où, pour des vitrages de 2 mm d'épaisseur, la ténacité à la fracture conforme aux normes comprend le domaine de trempe allant de 64 à 80 MN/m², il s'avère que, pour une feuille de verre individuelle de 2 mm d'épaisseur d'un vitrage feuilleté conforme à l'invention, les contraintes de traction, dans la zone marginale, sont au minimum de 54 MN/m² et au maximum de 76 MN/m². Cependant, les contraintes de traction dans la zone marginale sont de préférence situées en dessous de la valeur de contrainte inférieure de la trempe conforme aux normes, c'est-à-dire dans le domaine de 54 à 64 MN/m². Dans le champ central, les contraintes de traction à coeur du vitrage, dans le cas d'une feuille de verre individuelle de 2 mm d'épaisseur d'un vitrage feuilleté conforme à l'invention, sont au minimum de 38 et au maximum de 64 MN/m², et sont comprises de préférence dans le domaine allant de 38 à 60 MN/m².

Dans le cas de feuilles de verre individuelles de 2,5 mm d'épaisseur, pour une ténacité à la fracture conforme aux normes, le domaine des contraintes de traction est compris entre 59,5 et 77,5 MN/m². En conséquence, dans le cas des vitrages conformes à l'invention, les contraintes de traction dans la zone marginale sont au minimum de 50,6 et au maximum de 73,6 MN/m², et sont de préférence comprises dans le domaine allant de 50,6 à 59,5 MN/m². En revanche, dans le champ central, les contraintes de traction, pour le vitrage conforme à l'invention, sont au minimum de 35,7 et au maximum de 62 Mn/m², et sont de préférence comprises dans le domaine allant de 35,7 à 55 MN/m².

Dans le cas de feuilles de verre individuelles de 3 mm d'épaisseur, le domaine des contraintes de traction à coeur pour une ténacité à la fracture conforme aux normes, est compris entre 55 à 75 MN/m². Cela signifie que, pour cette épaisseur des feuilles de verre individuelles, dans le cas d'un vitrage en verre feuilleté conforme à l'invention, dans la zone marginale, les contraintes de traction à coeur sont de 46,7 à 71,2 MN/m², de préférence de 46,7 à 55 MN/m². Dans le champ central, les contraintes de traction à coeur sont de 33 à 60 MN/m² et de préférence de 33 à 55 MN/m².

Dans le cas des vitrages conformes à l'invention, on atteint les meilleurs résultats lorsque les contraintes dans le champ central des vitrages sont sensiblement en dessous de la limite inférieure du domaine de trempe prévu pour la ténacité à la fracture conforme aux normes, alors que, dans la zone marginale, elles ne sont que légèrement en dessous de la limite inférieure du domaine de trempe prévu pour la ténacité à la fracture conforme aux normes. Par exemple, dans le cas d'un vitrage feuilleté formé de feuilles de verre individuelles de 2,5 mm d'épaisseur, on obtient de très bons résultats lorsque les contraintes de traction dans la zone marginale vont de 54 à 58 MN/m² et, dans le champ central, de 46 à 50 MN/m².

Grâce à la différenciation conforme à l'invention et la réduction différentielle des contraintes de traction au coeur des feuilles de verre et ainsi des contraintes de compression aux surfaces des feuilles de verre, il est acquis, d'une part que la solidité dans le champ central du vitrage en verre feuilleté, comparativement à celle d'un vitrage en verre feuilleté comportant au moins une feuille de verre individuelle complètement trempée, est diminuée dans une mesure telle que, par exemple en cas d'accident, le vitrage feuilleté casse de l'extérieur et la baie de fenêtre peut ainsi être assez rapidement dégagée. Alors que le champ central des deux feuilles de verre individuelles du vitrage feuilleté se brise dans ce cas en de très gros fragments, la zone marginale se brise en des fragments relativement petits, ce qui facilite le dégagement du vitrage feuilleté de son châssis. Grâce à la moindre solidité du vitrage feuilleté dans le champ central, le risque de blessure par l'impact, par exemple de la tête contre la surface intérieure du vitrage feuilleté, est réduit du fait que le vitrage feuilleté se brise auparavant et qu'ainsi l'énergie du choc est annulée par la déformation plastique de la couche intermédiaire en matière plastique. D'autre part, la trempe accrue dans la zone marginale du vitrage a par contre pour effet d'augmenter sensiblement la solidité dans cette zone marginale. Grâce à cette solidité accrue dans la zone marginale, le vitrage feuilleté résiste sans problème aux sollicitations plus élevées auxquelles il est soumis au niveau de ses bords libres, par exemple lors du claquement des portières ou suite à d'autres forces agissant sur les bords du vitrage.

La trempe différenciée dans la zone marginale et dans le champ de vision, dans le cadre des valeurs de contrainte de traction conformes à l'invention, s'est également avérée avantageuse dans la mesure où, à condition que l'on respecte les limites indiquées, aucune déformation des vitrages ne se produit pendant le processus de trempe. Par exemple, si les contraintes de traction dans le champ central sont réduites davantage ou si, dans la zone marginale, une contrainte de traction correspondant à la trempe complète est produite, dans ce cas, d'après la forme et la grandeur des vitrages, des déformations peuvent surgir du fait que les contraintes dans la zone marginale provoquent simultanément une contrainte annulaire de retrait. Les déformations qui sont ainsi produites sont cependant particulièrement gênantes dans le cas de la transformation ultérieure de deux feuilles de verre individuelles en un vitrage feuilleté.

L'action du vitrage automobile conforme à l'invention se caractérise par le fait qu'au niveau de sa surface, lorsqu'il est mis en charge, il se comporte d'une manière tout à fait comparable à un pare-brise en verre feuilleté, tandis qu'au niveau de son bord, il se comporte comme un vitrage latéral en verre de sécurité trempé, de sorte qu'il combine ainsi les avantages de ces deux types de vitrages d'une manière spécialement nécessaire pour des vitrages latéraux.

Des vitrages en verre feuilleté formés de deux feuilles de verre individuelles chacune de 2,5 mm d'épaisseur sont particulièrement avantageux. Contrairement aux feuilles de verre de 2 mm d'épaisseur, les feuilles de verre de 2,5 mm d'épaisseur d'une part peuvent être trempées nettement plus facilement aux valeurs souhaitées et, d'autre part, présentent une solidité mécanique qui, dans l'ensemble, est nettement inférieure à celle des feuilles de verre de 3 mm d'épaisseur, de sorte que, du point de vue de la sécurité biomécanique, elles sont plus avantageuses que les feuilles de verre de 3 mm d'épaisseur.

La largeur de la zone marginale plus fortement trempée va de 0,5 à 3 cm et de préférence d'environ 1 à 2 cm.

Pour la couche intermédiaire thermoplastique, les pellicules habituelles en butyral polyvinylique de, par exemple 0,76 mm d'épaisseur, et des pellicules correspondantes en polyuréthanne thermoplastique telles qu'elles peuvent être obtenues dans le commerce, se sont avérées satisfaisantes. Il peut cependant également être avantageux d'utiliser des pellicules de type commercial de 0,38 mm d'épaisseur. Les feuilles de verre et/ou la couche intermédiaire thermoplastique peuvent être teintées dans la masse dans leur totalité ou localement ou peuvent être pourvues de couches superficielles transparentes colorantes et/ou partiellement réfléchissantes.

Selon des procédés connus, la trempe thermique du vitrage peut s'effectuer à l'aide de caissons de soufflage appropriés. Dans ce cas, on peut utiliser des caissons de soufflage dits à fentes qui, dans le cas d'un déplacement dans un sens perpendiculaire aux fentes de soufflage, produisent une contrainte essentiellement homogène, ou on peut également utiliser des caissons de soufflage à tubes ce qui, en fonction de la géométrie des ajutages, donne des structures de contraintes. En tout cas, il faut cependant prévoir une dissipation de chaleur renforcée de manière correspondante dans la zone marginale des feuilles de verre individuelles afin d'atteindre les contraintes de traction supérieures souhaitées dans cette zone marginale.

Les contraintes de traction à coeur des feuilles de verre peuvent être déterminées par exemple à l'aide du procédé à lumière diffusée et laser, tel qu'il a été décrit par exemple par S. Bateson, I.W. Hunt, D.A. Dally et N.K. Sinha dans la publication "Stress measurements in Tempered Glass Plates by Scattered Light Method with a Laser Source", Bulletin of the American Ceramic Society 45 (1966), pages 193 à 198.

Dans la pratique, on peut déterminer par approximations les contraintes dans les feuilles de verre en mesurant la grandeur des fragments d'un vitrage cassé et en déduisant les contraintes de traction sur base de la relation connue entre la valeur de contrainte et la grandeur des fragments. Les conditions qui se rapportent aux valeurs des contraintes de traction sont alors en substance remplies lorsque, dans le cas de la destruction du vitrage dans sa zone marginale, on obtient une image de fracture qui présente des fragments de verre un peu plus gros que ceux des vitrages en verre trempé classiques, tandis que les conditions concernant les valeurs de contraintes dans le champ central des vitrages sont remplies lorsque l'on obtient une image de fracture à très gros fragments dont les fragments se trouvent largement en dehors de la grandeur de fragment autorisée par la norme prévue pour le verre de sécurité trempé.

On peut produire la structure de contraintes conforme à l'invention à l'aide des dispositifs de trempe connus en faisant varier les paramètres du procédé, comme la pression de l'air et la distance séparant le verre des ajutages de soufflage, ainsi que la configuration géométrique des caissons de soufflage d'une manière correspondant à l'image de fracture respectivement obtenue, jusqu'à ce que la structure de fracture souhaitée soit atteinte. Dans ce cas, il faut garantir, en particulier par des mesures adéquates, que la dissipation de la chaleur soit adéquatement plus importante dans la zone marginale du vitrage que dans la zone de sa surface. Dans le cas d'une feuille de verre individuelle fabriquée à l'aide des paramètres de procédés ainsi déterminés, la contrainte dans le champ central et dans la zone marginale peut être mesurée à l'aide du procédé à lumière dispersée et à laser et le réglage fin final des paramètres du procédé peut être effectué.

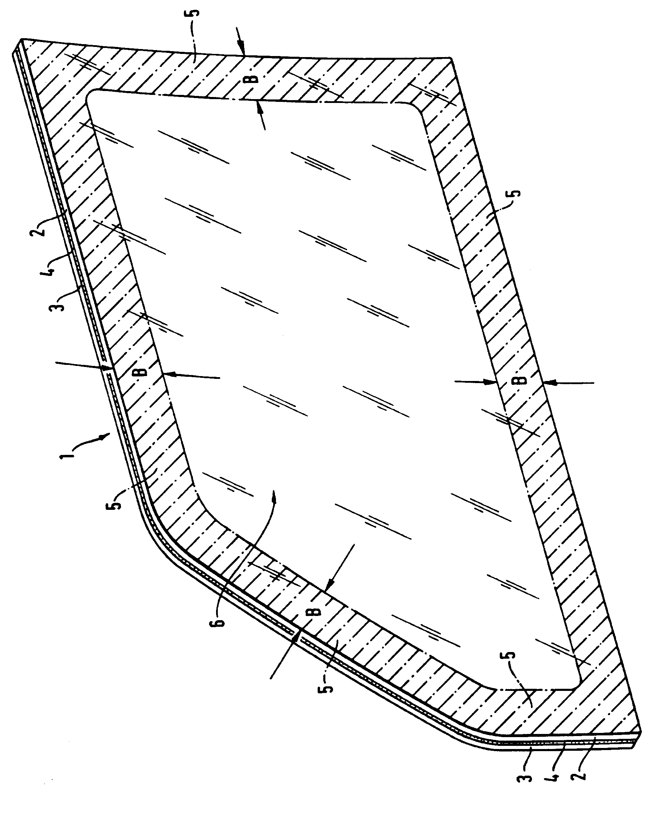

Pour être plus complet, un vitrage feuilleté 1 présentant les particularités de l'invention est représenté en perspective au dessin annexé. Le vitrage feuilleté 1 présente une forme légèrement cintrée de manière cylindrique et sert de vitrage de portière montant et descendant. Il est constitué de la feuille de verre individuelle intérieure 2 et de la feuille de verre individuelle extérieure 3 qui sont unies l'une à l'autre à chaud et sous pression à l'aide de la couche intermédiaire 4 en butyral polyvinylique de 0,76 mm d'épaisseur. Les deux feuilles de verre individuelles 2 et 3 ont chacune une épaisseur de 2,5 mm et présentent la structure de contraintes conforme à l'invention. Ceci signifie qu'à l'intérieur de la zone marginale continue 5 d'une largeur B d'environ 1,5 cm, les contraintes de traction à coeur moyennes sont de 56 MN/m² et, dans le champ central 6 situé à l'intérieur de la zone marginale 5, les contraintes de traction à coeur s'élèvent à 48 MN/m². Le vitrage feuilleté 1 possède des propriétés remarquables du point de vue biomécanique à la fois en ce qui concerne ses possibilités de fabrication en série et sa sécurité sur le plan de la circulation et des accidents.

## Revendications

1. Vitrage automobile en verre feuilleté constitué de deux feuilles de verre individuelles qui ont subi chacune une trempe thermique et qui sont unies l'une à l'autre au moyen d'une couche intermédiaire thermoplastique, **caractérisé en ce que** chacune des feuilles de verre individuelles a une épaisseur de 1,5 à 3,5 mm et est constituée d'une zone centrale et d'une zone marginale tout autour de la zone centrale, chaque feuille de verre présente une trempe différenciée sur sa surface à tel point que la contrainte de traction à coeur moyenne dans la zone centrale de la feuille de verre est inférieure de 20 à 40 % à celle nécessaire pour créer de 40 à 400 fragments de verre lors de la destruction d'un carré de 5 cm x 5 cm d'un verre de sécurité trempé uniformément ayant la même épaisseur que la feuille de verre, et que la contrainte de traction à coeur moyenne dans la zone marginale est inférieure de 5 à 15 % à celle nécessaire pour créer de 40 à 400 fragments de verre lors de la destruction d'un carré de 5 cm x 5 cm d'un verre de sécurité trempé uniformément ayant la même épaisseur que la feuille de verre.

2. Vitrage automobile suivant la revendication 1, **caractérisé en ce que**, pour une épaisseur des feuilles de verre individuelles de 2,0 mm, les contraintes de traction à coeur, dans la zone marginale de ces feuilles de verre, sont de 54 à 76 MN/m² et, pour une épaisseur de feuilles de verre de 3 mm, de 46,7 à 71,2 MN/m² et que, dans le champ central des feuilles de verre, les contraintes de traction à coeur sont de 38 à 64 MN/m² pour une feuille de verre de 2 mm d'épaisseur et, pour une épaisseur de la feuille de verre de 3 mm de 33 à 60 MN/m².

3. Vitrage automobile suivant la revendication 2, **caractérisé en ce que**, pour une épaisseur des feuilles de verre individuelles de 2,0 mm, les contraintes de traction, dans la zone marginale de ces feuilles de verre, sont de 54 à 64 MN/m² et, pour une épaisseur de feuille de verre de 3 mm, de 46,7 à 55 MN/m², et que, dans le champ central des feuilles de verre, les contraintes de traction à coeur sont de 38 à 60 MN/m² pour une feuille de verre de 2 mm d'épaisseur et, pour une épaisseur de feuille de verre de 3 mm, de 33 à 55 MN/m².

4. Vitrage automobile suivant les revendications 1 à 3, **caractérisé en ce que** les deux feuilles de verre individuelles qui ont chacune une épaisseur de 2,5 mm présentent, dans la zone marginale, une contrainte de traction à coeur de 54 à 58 MN/m² et dans le champ central une contrainte de traction de 46 à 50 MN/m².

5. Vitrage automobile suivant l'une quelconque des revendications 1 à 4, **caractérisé en ce que** la largeur (B) de la zone marginale plus fortement trempée est de 0,5 à 2 cm.

## Claims

1. Laminated glass car glazing constituted by two individual glass sheets, each of which has undergone tempering and which are joined to one another by means of an intermediate thermoplastic layer, characterized in that each of the individual glass sheets has a thickness of 1.5 to 3.5 mm and is constituted by a central area and a marginal area all around the central area, each glass sheet having a differentiated tempering on its surface to such an extent that the average core tensile stress in the central area of the glass sheet is 20 to 40% below that necessary for creating 40 to 400 glass fragments during the destruction of a 5 cm x 5 cm uniformly tempered safety glass square having the same thickness as the glass sheet and that the average core tensile stress in the marginal area is 5 to 15% below that necessary for creating 40 to 400 glass fragments during the destruction of a 5 cm x 5 cm square of a uniformly tempered safety glass having the same thickness as the glass sheet.

2. Car glazing according to claim 1, characterized in that, for an individual glass sheet thickness of 2.0 mm, the core tensile stresses in the marginal area of said glass sheets are 54 to 76 MN/m² and, for a glass sheet thickness of 3 mm, 46.7 to 71.2 MN/m² and that, in the central area of the glass sheets, the core tensile stresses are 38 to 64 MN/m² for a 2 mm thick glass sheet and 33 to 60 MN/m² for a 3 mm thick glass sheet.

3. Car glazing according to claim 2, characterized in that, for an individual glass sheet thickness of 2.0 mm, the tensile stresses in the marginal area of said glass sheets are 54 to 64 MN/m² and for a 3 mm glass sheet thickness 46.7 to 55 MN/m² and that, in the central area of the glass sheets, the core tensile stresses are 38 to 60 MN/m² for a 2 mm thick glass sheet and 33 to 55 MN/m² for a 3 mm thick glass sheet.

4. Car glazing according to claims 1 to 3, characterized in that the two individual glass sheets, each having a thickness of 2.5 mm have, in the marginal area, a core tensile stress of 54 to 58 MN/m² and in the central area a tensile stress of 46 to 50 MN/m².

5. Car glazing according to any one of the claims 1 to 4, characterized in that the width (B) of the more highly tempered marginal area is 0.5 to 2 cm.

## Patentansprüche

1. Autoglasscheibe aus Verbundglas aus zwei jeweils thermisch vorgespannten und mittels einer thermoplastischen Zwischenschicht miteinander verbundenen Einzelglasscheiben, **dadurch gekennzeichnet**, daß jede der beiden Einzelglasscheiben eine Dicke von 1,5 bis 3,5 mm hat und aus einem Zentralbereich und einem diesen vollständig umgebenden Randbereich gebildet ist,
daß jede Glasscheibe eine über ihre Oberfläche unterschiedliche Vorspannung derart aufweist,
daß die mittlere Kernzugspannung im Zentralbereich der Glasscheibe um 20 bis 40 % geringer als diejenige Zugspannung ist, welche zum Erzeugen von 40 bis 400 Glasbruchstücken bei Zerstörung eines Quadrats von 5 cm x 5 cm aus einheitlich vorgespanntem Sicherheitsglas mit derselben Dicke wie die Glasscheibe notwendig ist, und
daß die mittlere Kernzugspannung im Randbereich um 5 bis 15 % geringer ist als die Zugspannung ist, welche zum Entstehen Von 40 bis 400 Glasbruchstücken bei Zerstörung eines Quadrats von 5 cm x 5 cm aus einheitlich vorgespanntem Sicherheitsglas mit derselben Dicke wie die Glasscheibe notwendig ist.

2. Autoglasscheibe nach Anspruch 1, **dadurch gekennzeichnet**, daß bei einer Dicke der Einzelglasscheiben von 2,0 mm die Kernzugspannungen im Randbereich dieser Glasscheiben 54 bis 76 MN/m² und bei einer Glasscheibendicke von 3 mm 46,7 bis 71,2 MN/m² betragen, und daß im Zentralbereich der Glasscheiben die Kernzugspannungen im Kern bei einer 2 mm dicken Glasscheibe 38 bis 64 MN/m² und bei einer Glasscheibendicke von 3 mm 33 bis 60 MN/m² betragen.

3. Autoglasscheibe nach Anspruch 2, **dadurch gekennzeichnet**, daß bei einer Dicke der Einzelglasscheiben von 2,0 mm die Zugspannungen im Randbereich dieser Glasscheiben 54 bis 64 MN/m² und bei einer Glasscheibendicke von 3 mm 46,7 bis 55 MN/m² betragen, und daß im Zentralbereich der Glasscheiben die Zugspannungen im Kern bei einer 2 mm dicken Glasscheibe 38 bis 60 MN/m² und bei einer Glasscheibendicke von 3 mm 33 bis 55 MN/m² betragen.

4. Autoglasscheibe nach Anspruch 1 bis 3, **dadurch gekennzeichnet**, daß die beiden Einzelglasscheiben je eine Dicke von 2,5 mm, im Randbereich eine Zugspannung im Kern von 54 bis 58 MN/m² und im Zentralbereich eine Zugspannung von 46 bis 50 MN/m² aufweisen.

5. Autoglasscheibe nach einem der Ansprüche 1 bis 4, **dadurch gekennzeichnet**, daß die Breite (B) des stärker vorgespannten Randbereichs 0,5 bis 2 cm beträgt.
